# EUROPEAN PATENT APPLICATION

(11) **EP 2 662 169 A2**
(43) Date of publication of application: **13.11.2013**
(21) Application number: 13179765.6
(22) Date of filing: 26.05.2009
(51) Int. Cl.: B23B 29/04, B23B 27/16, B23B 31/30, B23B 29/12, B23B 29/034

(54) **Cutting tool**

(62) Divisional of application: 09755131.1
(71) Applicant: GKN Aerospace Sweden AB, 461 81 Trollhättan (SE)
(72) Inventor: Wretland, Anders, SE-421 44 Västra Frölunda (SE); Hagward, Tore, S-461 59 Trollhättan (SE)
(74) Representative: Albutt, Anthony John

(57) **Abstract**

A holder for a cutting tool, comprising a body having a first channel for receiving a stem portion of the cutting tool. The body has a second channel intersecting with said first channel. The holder further comprises a plunger (13) to be inserted in the second channel, said plunger (13) having a third channel (14) the cross section of which at least partly overlaps with the cross section of the first channel when the plunger (13) is inserted into the body so as to enable the stem of the cutting tool to extend into the third channel (14) when the stem is inserted in the first channel. The holder (1) further comprises a mechanism (26) for locking the stem against movement relative to the body by means of the plunger. The invention furthermore relates to a cutting tool for use in such a holder and a cutting insert.

## Description

### FIELD OF INVENTION

The invention relates to a holder for a cutting tool according to the preamble of claim 1. In particular the invention relates to holder for a cutting tool where the holder is adapted to firmly hold the cutting tool to transfer a rotational movement from a driving source in boring or milling machine to a cutting tool secured in the holder. The cutting tool may preferably be designed for chip forming metal cutting.

### BACKGROUND OF THE INVENTION

Precision cutting requires that the position at which a cutting tool is located when held by a holder for the cutting tool is highly reproducible. For this purpose various types of holder for cutting tools are known. Precision hole making is defined by characteristics - among others - such as straightness, roundness and position accuracy, and in addition - for some applications - the properties of the produced surfaces. In particular for high integrity components such as gas turbine rotors and pressurized vessels a high demand is imposed on the tools in order to achieve the desired property on the machined surfaces. The type of tool holder used has an impact of the quality of the worked surfaces.

A common type of tool holder is designed as body having a channel for receiving a stem portion of a cutting tool. The stem portion will be locked by screws that penetrate into the channel in order to engage with the stem portion of the cutting tool. With this type of locking engagement, load is concentrated to one or two locations where the screw or screws engage with the stem. It has shown that this type of engagement does not suppress oscillations for certain frequencies, which frequencies depend on the location of the connection between the screw and the shaft. Another type of locking device is presented in US 6,568,055, where an axially wedge shaped sleeve is pushed by a hydraulic actuator to tighten a boring arbour.

### SUMMARY OF THE INVENTION

It is an object of the invention to provide a tool holder that facilitates preparation of high quality surfaces and which creates conditions for a cost- efficient production and/or use of the tool holder.

This object is achieved by a tool holder according to claim 1. A tool holder according to the invention comprises a body having a first channel for receiving a stem of the cutting tool. The body furthermore includes a second channel intersecting with the first channel. A plunger is inserted in the second channel. The plunger has a third channel with a cross section which at least partly overlaps with the cross section of the first channel when the plunger is inserted into the body. The stem of the cutting tool thereby extends into the third channel when the stem is inserted in the first channel. The holder further comprises a mechanism for locking the stem against movement relative to the body by means of the plunger. The invention is based on the observation that the quality of the machined surfaces is dependent on the wear of the cutting insert. By virtue of the fact that the holder comprises a plunger with said third channel, which plunger is configured for acting on the stem, an accurate holding of the cutting tool can be achieved. Further, by arranging the plunger moveable in the second channel which intersects with the first channel into which a cutting tool is inserted, lateral compensation of the position of the cutting tool is facilitated. Hence, production of high quality surfaces is facilitated.

According to an embodiment, the plunger comprises said locking mechanism. In this way, the need for including functional features for locking the cutting tool in the body is eliminated. It is therefore easier to make the body sufficiently sturdy to achieve a desired stiffness of the tool holder. Preferably the body may be formed as a monolith only provided with ducts for cooling liquid and means for locking and positioning of the plunger relatively to the body. Hence the tool holder enables production of high quality surfaces by facilitating lateral positioning of the cutting tool, while allowing a compact stiff design of the body. The plunger may thus be moveably arranged in the second channel so as to allow lateral dislocation of the plunger and hence of the cutting tool. Accurate lateral positioning of the cutting insert to compensate for the successive wear of the cutting insert may therefore be achieved in a straightforward manner while maintaining a firm grip of the cutting tool.

According to a further embodiment, said locking mechanism comprises a membrane delimiting a pressure chamber. The holder may comprise a mechanism for pressurizing the pressure chamber in order to lock the stem against movement relative to the body. In this embodiment a holder is provided, which enables suppression of oscillation over a wide range of frequencies.

According to a further embodiment, the membrane forms a part of the third channel and is configured to act directly on the stem. The pressure mechanism is configured to press the membrane directly against the stem. Thus, the membrane is integrated into the plunger, which creates further conditions for a firm locking of the sutting tool.

The contact between the stem and the membrane forming part of the third channel in the plunger ensures a distribution of the load on the stem enabling suppressions of oscillation of the cutting tool.

Optionally, the part of the third channel which is formed by the membrane is cylindrical and especially circular-cylindrical. The use of a cylindrical membrane ensures that the membrane grips the stem with a constant radial load. A hydraulic oil pipe is connected to the pressure chamber for enabling a movement of the membrane thereby enabling locking or release of the stem of the cutting tool. The use of hydraulic locking of the stem has a beneficial effect on the suppression of oscillations of the cutting tool.

Optionally a hydraulic oil pipe connects the pressure chamber with an outwardly facing end wall of the plunger, at which the mechanism for pressurizing the pressure chamber is located.

Optionally the first channel may extend along a first length axis and the second channel may extend along a second length axis. Each of the first and second channels are preferably straight. Optionally the first and second axes are essentially perpendicular to each other. By arranging the first and second axes perpendicular to each other, the risk of that the stem is axially dislocated during the locking process is reduced since a small movement of the plunger in the second channel in this case will not result in a translation of the plunger relatively to the length axis of the first channel. Hence movement of the plunger will not result in axial dislocation of the cutting tool.

Optionally the third channel extends through said plunger so as to enable a stem of a cutting tool to extend through said third channel when the stem is inserted in the first channel. The third channel is preferably straight. By allowing the stem to pass through the third channel a good contact between the stem and the membrane is ascertained.

Optionally the holder includes a mechanism for movement of the plunger along a length axis of said second channel so as to position the stem in a lateral position relatively to the body. Lateral positioning is performed to enable accurate positioning as the cutting insert wears out during use.

Optionally the holder comprises means for angular and/or axial positioning of the cutting tool relative to the body. Preferably, the positioning means comprises an indentation provided at an opening of the first channel, which indentation is arranged to receive a notch provided on said stem of the cutting tool, thereby enabling axial and angular positioning of the cutting tool.

The invention furthermore relates to a cutting tool for use in a holder, which cutting tool includes a stem. The cutting tool comprises means for angular and/or axial positioning of the cutting tool relative to a body of the holder. Particularly said positioning means comprises a notch provided on a stem of the cutting tool, thereby enabling axial and angular positioning of the cutting tool in the holder. The notch is to be inserted in a corresponding indentation made at the holder for enabling axial and angular positioning of the tool in the holder.

Optionally the stem portion of the cutting tool includes a cooling liquid flow entrance in a lower region of the stem, a cooling liquid feeding conduit extending from said liquid flow entrance to a head located on the top of said stem, and a cooling liquid ejector outlet nozzle connected to said cooling liquid feeding conduit at said top portion of said stem.

Optionally the cooling liquid ejector outlet nozzle has a smaller cross sectional area than said cooling liquid feeding conduit. By arranging the cooling liquid feeding conduit with a larger cross sectional area than the cooling liquid ejector outlet nozzle it is ensured that the pressure drop in the cutting tool can be reduced.

Optionally the cooling liquid ejector outlet nozzle has a length between 1 mm and 3 mm. By making the cooling liquid ejector outlet nozzle short an output spray from the nozzle will be focussed. Long narrow channels will tend to result in a distributed spray. By making the length of the narrow cooling liquid ejector outlet nozzle short, the spray will thus be focused.

Optionally the cooling liquid feeding conduit is eccentric in relation to a centre axis of said stem. Steep changes in flow direction result in cavitation losses. The eccentric location allows for less steep change in flow direction in the vicinity of the cooling liquid ejector outlet nozzle.

The cutting tool preferably comprises a head located on the top of the stem. Optionally, said head includes a first surface, which extends in a plane in parallel with a longitudinal axis of the cutting tool, wherein a cutting insert is located on the first surface, and a second surface which extends in a plane which is inclined with regard to a plane at right angles to the longitudinal axis and which intersects with a length axis of the cooling liquid ejector outlet nozzle. This arrangement allows that the cooling liquid ejector outlet nozzle, which may have an exit opening in the inclined surface which extends perpendicularly to the direction of the inclined surface, may focus a cooling liquid jet on an edge of a cutting insert. The location of the rim an exit opening in a plane vertical to the length axis of the cooling liquid ejector outlet nozzle reduces spray diffusion in comparison to when the plane is inclined in relation to the length axis of the cooling liquid ejector outlet nozzle.

Optionally the cutting tool includes a cutting insert which before use has a polygonal cross sectional shape, that sides of the polygon meet at rounded comers and that a straight portion is present in the rounded area. Preferably, the polygon has the shape of an equilateral triangle or a square. Optionally the cutting insert is secured to said head such that said straight portion is coaxial with a centre axis of a stem of said cutting tool. By allowing the straight portion to be coaxial with the centre axis a reduction of wear of the cutting insert and of unintended deformation of the worked goods can be obtained. It is believed that in the event no straight portion is present in the rounded area a local concentration of force is obtained at the contact between the goods and the cutting insert such that the contact force will initially be too high with excessive wear and risk for damage of the cutting insert as well as of the worked goods as a consequence.

The invention also relates to a cutting insert which before use has the shape of an equilateral triangle or a square, which sides meet at rounded corners and that a straight portion is present in the rounded area. Optionally, the rounded corners have a curvature radius between 0,6 and 1 ,2 mm and that the straight area has a length between 0,07 and 0,15 mm.

### BRIEF DESCRIPTION OF THE DRAWINGS

Embodiments of the invention will now be described in more detail with reference to appended drawings, where
FIG. 1 shows a perspective view of a holder for a cutting tool,
FIG. 2 shows a cross section through a plunger along a plane formed by the length axes of a first and second channel respectively, when the plunger is installed in correct position in the second channel,
FIG. 3 shows a perspective view of a plunger,
FIG. 4 shows a cross section along a plane formed by the length axes of a first and second channel respectively, with a plunger in a first retracted position,
FIG. 5 shows a cross section along a plane formed by the length axes of a first and channel respectively, with a plunger in a second projecting position,
FIG. 6 shows a top view of a holder, with a plunger in a first retracted position,
FIG. 7 shows a top view of a holder, with a plunger in a second projecting position,
FIG. 8 shows a cross section through a plunger as shown in figure 2 further including means for locking the plunger against movement in the length direction of the second channel,
FIG. 9 shows a side view of a cutting tool, facing a flat surface in the head of the cutting tool,
FIG. 10 shows a side view of the cutting tool shown in FIG. 7 taken along a flat surface in the head of the cutting tool,
FIG. 11 shows a cross section of the cutting tool in figures 9 and 10, and
FIG. 12 and 13 show a cutting insert in detail.

### DETAILED DESCRIPTION

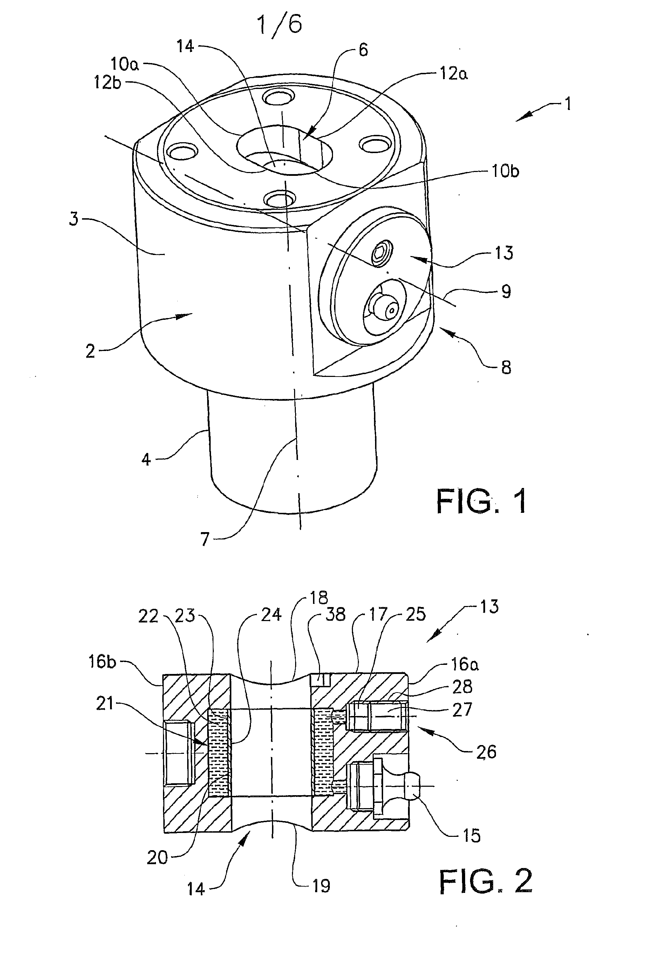

In figure 1 a holder 1 for a cutting tool (not shown) is shown. The holder 1 comprises a body 2. The body 2 includes a head portion 3 and a stem portion 4. The head portion 3 includes a first channel 6 arranged for receiving a stem of a cutting tool. The first channel 6 extends along a first length axis 7 in a first axial direction which is coaxial with a rotational axis when the tool holder is mounted in a metal working machine. The head portion 3 furthermore includes a second channel 8, which intersects with said first channel 6. The second channel 8 extends along a second length axis 9.The first and second length axes 7, 9 are preferably perpendicular or essentially perpendicular to each other. The first channel 6 has in the embodiment shown in figure 1 a cross-section in a plane transverse to the first length axis 7 which is of a larger dimension than a stem of a cutting tool. More specifically, said cross section is elongated and preferably composed of two half circles 10a, 10b connected with two linear segments 12a, 12b. The stem of the cutting tool having a circular cross-section may thus be moved in direction of the second length axis.

A plunger 13 is inserted in the second channel 8. The plunger 13 is provided with a third channel 14, see figure 2, the cross section of which at least partly overlaps with the cross section of the first channel 6 when the plunger 13 is inserted into the body 4. In figure 1, part of an upper opening of the third channel 14 is shown below an upper opening of the first channel 6.

The stem of the cutting tool inserted in the first channel 6 may thus be received in the third channel 14. In figure 2 is shown a cross section through the plunger 13 along a plane formed by the length axes 7, 9 of the first and second channel respectively, when the plunger is installed in correct position in the second channel. The plunger 13 has a cylindrical shape with two parallel, flat end surfaces or end walls 16a, 16b connected by an envelope surface 17. The plunger 13 may have alternative shapes as long as it fits and in the second channel 8 and. may be secured in the second channel 8 so as to allow a limited axial movement in the second axial direction 9. In the drawing it is shown that the third channel 14 extends through the plunger 13 from an upper opening 18 to a lower opening 19.

A membrane 20 forms a part of the third channel. The membrane 20 may be formed by a cylindrical sleeve which is introduced into an internal cavity in the wall forming the third channel. The sleeve is sealed at its upper and lower ends. The sleeve 20 covers an annular shaped trace 21 in the cavity forming the third channel. The trace 21 forms a pressure chamber 22, which has an annular shape. An interior cylindrical wall 23 of the pressure chamber extending along the first length axis 7 is thus defined by an envelope surface of said membrane 20, which faces radially outwards. Part of the third channel 14 is defined by an envelope surface of said membrane 20, which faces radially inwards. Thus, said envelope surfaces are defined by opposite sides of a wall 24 of said membrane. A hydraulic oil pipe 25 is connected to the pressure chamber 22 for enabling a movement of the membrane 20 thereby enabling locking or release of the stem of the cutting tool. The hydraulic oil pipe 25 connects the pressure chamber 22 with the end surface, or wall 16a of the plunger 13. A mechanism 26 for pressurizing the pressure chamber is located at the end wall. In this embodiment, the mechanism for pressurising the pressure chamber is constituted by a screw 27 arranged in a threaded bore 28. By rotating the screw such that it is moved inwardly, an incompressible hydraulic fluid contained in the pressure chamber and the hydraulic oil pipe would force the membrane to bulge inwardly and grip a stem of a cutting tool, if present in the third channel. By rotating the screw such that it is moved outwardly, the membrane would progressively be released to assume an unloaded position and a grip a stem of a cutting tool, if present in the third channel, may be released. In order to facilitate filling of the pressure chamber with suitable hydraulic oil or grease a vacuum nipple 15 is connected to the pressure chamber via a conduit. Filling of the chamber can then be achieved by connecting the nipple 15 to a vacuum source while removing the screw 27 from the bore 28 and supplying oil or grease to the conduit connected to the bore 28.

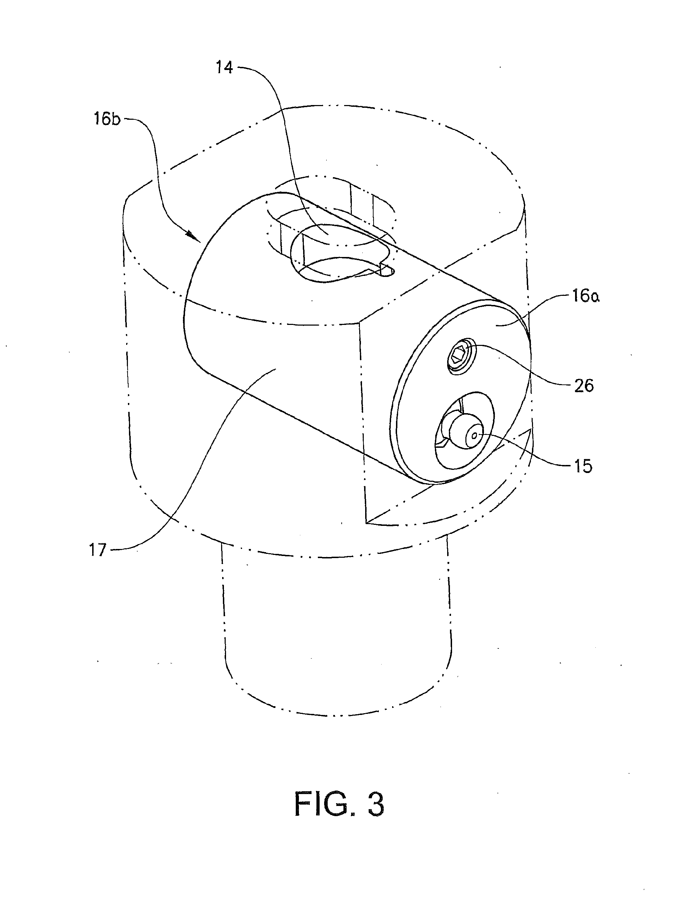

Figure 3 shows the plunger 13 of figure 2 in perspective view positioned in the body 2. The third channel 14 is visible in the envelope surface 17. One of the end walls 16a is provided with the locking means 26 and the nipple 15.

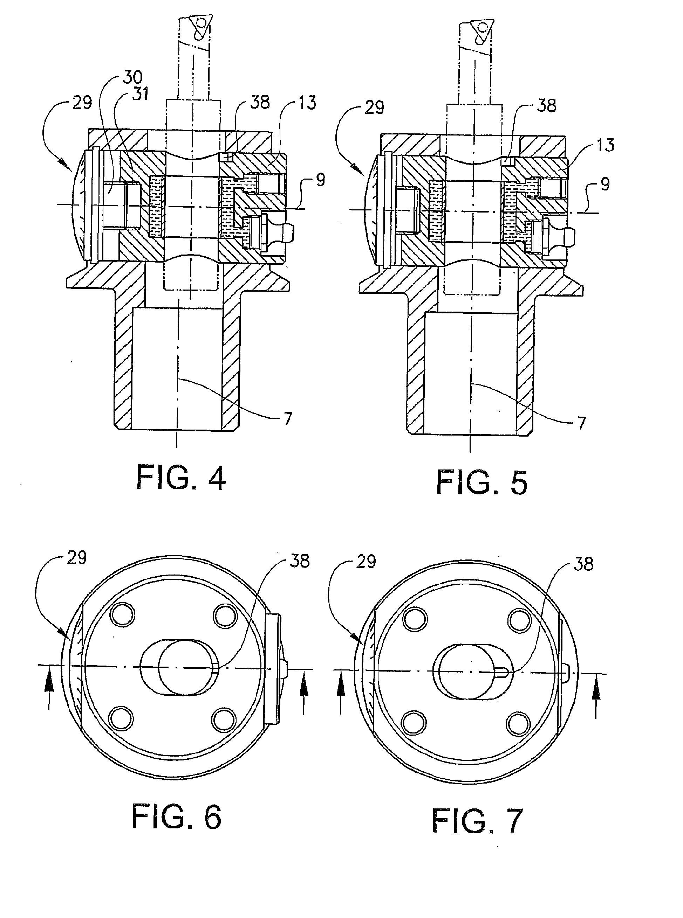

In figures 4 and 5 cross sections along a plane formed by the length axes of the first and second channel 6,8 respectively, with the plunger 13 in a first advanced position (fig 4) and in a second retracted position (fig 5) in the body 2, are shown.

In figures 6 and 7 top views of the holder, with the plunger in the first advanced position (fig 6) and in the second retracted position (fig 7), are shown.

The holder shown in figures 4 - 7 comprises a mechanism 29 for movement of the plunger along the length axis 9 of said second channel so as to position the stem of a cutting tool in a lateral position relatively to the body, that is along the length axis 9 of said second channel. The mechanism 29 includes a threaded screw 30 which engages in a threaded bore 31 formed in the plunger 13 or a nut secured to the plunger 13.

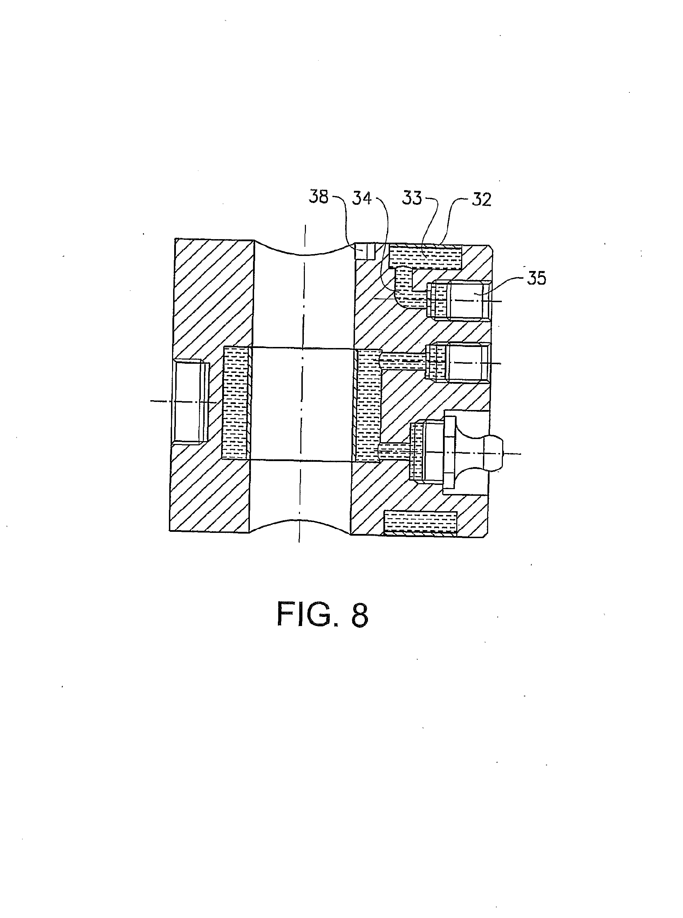

In an embodiment of the invention, as shown in figure 8, locking of the plunger against movement along the length axis 9 of said second channel may be achieved by a membrane 32 arranged in the envelope surface 17 of the plunger. A pressure chamber 33 is arranged inside of the membrane. The membrane is cylindrical in shape and the pressure chamber has an annular shape. A hydraulic oil pipe 34 is connected with the pressure chamber 33 and a mechanism 35 is configured for pressurizing the pressure chamber 33 so as to press the membrane 32 against inner walls of the second channel and lock the plunger against movement relative to the body. The mechanism 35 includes a threaded screw 36 which engages in a threaded bore 37.

As is seen in figures 2 - 8, an indentation 38 is provided in the plunger 13 at an upper opening 18 of the third channel 14. The indentation 38 is arranged to receive a notch provided on said stem of a cutting tool, thereby enabling axial and angular positioning of the cutting tool.

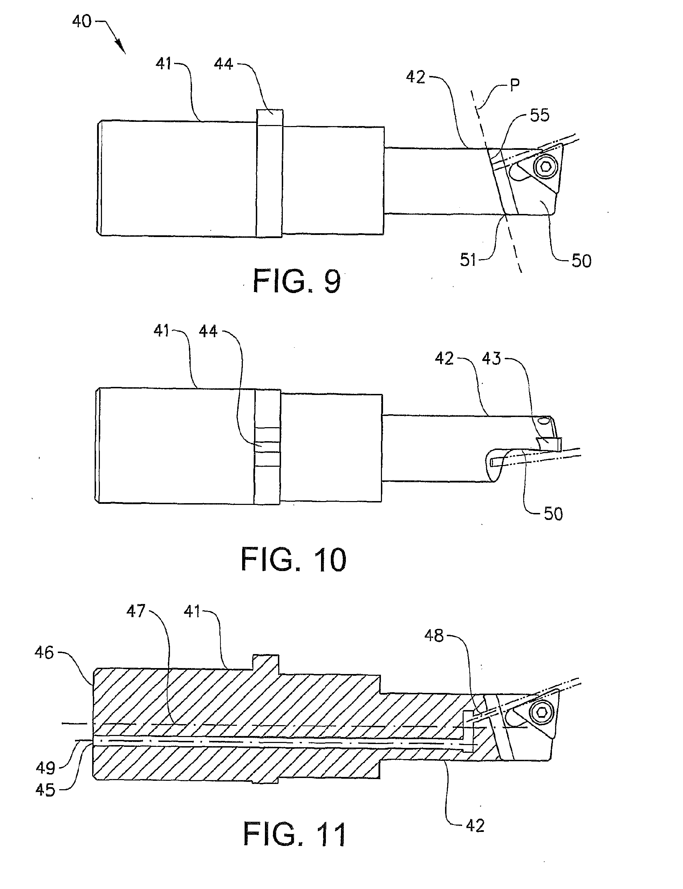

In figures 9 and 10 a cutting tool 40 is shown. The cutting tool 40 includes a stem 41 arranged to be inserted into the first and third channels of the holder for the cutting tool. The cutting tool furthermore includes a head 42 on which a cutting insert 43 is positioned. A notch 44 is provided on the stem 41 of the cutting tool, thereby enabling axial and angular positioning of the cutting tool in the holder, when the notch is positioned in a corresponding recess in the cutting tool holder. The stem 41 preferably includes or consists of cemented carbide and the head 42 is preferably made of tool steel. This combination ensures that the cutting tool has a high rigidity, while allowing formation of a carrier pocket or a carrier wall for a cutting insert with high accuracy.

In figure 11 a cross section of the cutting tool in figures 9 and 10 is shown. The cutting tool includes a cooling liquid flow entrance 45 in a lower region 46 of the stem. A cooling liquid feeding conduit 47 extends from said liquid flow entrance 45 to the head 42 located on the top of the stem 41. A cooling liquid ejector outlet nozzle 48 is connected to the cooling liquid feeding conduit 47 at the head 42. The cooling liquid feeding conduit 47 is eccentric in relation to a centre axis 49 of said stem. The cooling liquid ejector outlet nozzle 48 has a smaller cross sectional area than said cooling liquid feeding conduit 47. The cooling liquid ejector outlet nozzle may have a length between 1 mm and 3 mm.

The head 42 includes a first, substantially flat surface in the form of a vertical wall 50 on which the cutting insert 43 is located. The first flat surface 50 extends in a plane in parallel with the length direction of the cutting tool 40. The head furthermore includes a second, substantially flat surface 51, which is arranged at right angles to the first flat surface. The second flat surface 51 is further inclined with regard to a direction at right angles to the length direction of the cutting tool 40. The second surface forms an inclined wall 51 which extends in a plane P intersecting with a length axis 56 of the cooling liquid ejector outlet nozzle. The cooling liquid ejector outlet nozzle has an exit opening 55 in the inclined wall which extend perpendicularly to the direction of the inclined wall. A cooling liquid ejector outlet nozzle (48) opening for the cooling liquid is located in said second, inclined surface 51.

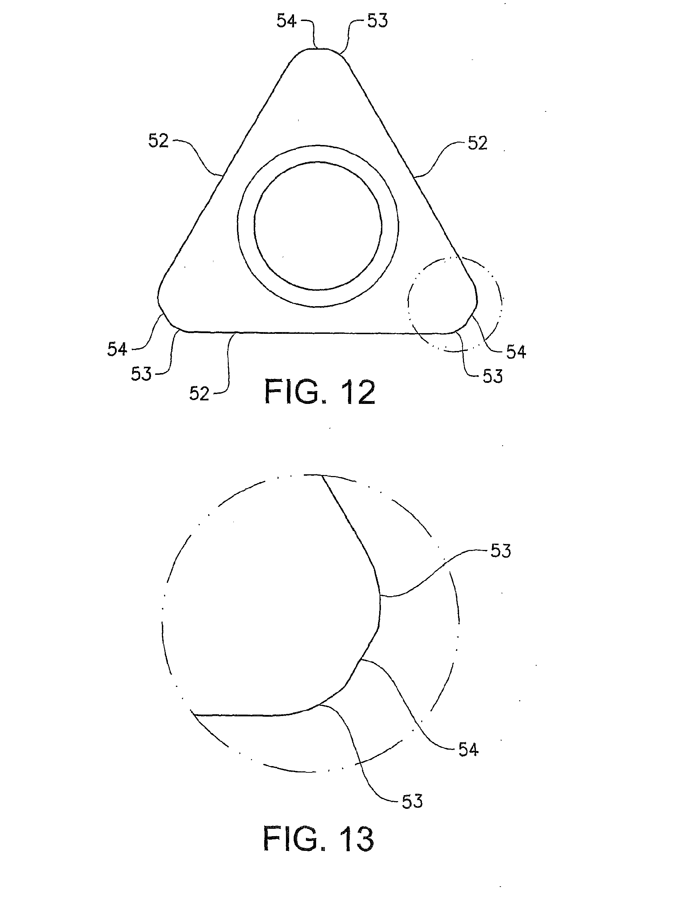

In figure 12 a cutting insert 43 before use is shown. The cutting insert has the shape of an equilateral triangle or a square, which sides 52 meet at rounded corners 53. A straight portion 54 is present at the rounded corners 53. Figure 13 shows a corner 53 of the cutting insert in figure 12 in magnified view. The rounded corners have a curvature radius between 0, 6 and 1, 2 mm and the straight portion has a length between 0, 07 and 0, 15 mm. Hence, the short straight portion has a curved portion located on both it sides. In use, the cutting insert is secured to said head such that said straight portion is coaxial with a rotational axis of said cutting tool.

### CLAUSES

1. A holder (1) for a cutting tool (40), comprising a body (2) having a first channel (6) for receiving a stem (41) of the cutting tool (40), **characterized in that** the body (2) has a second channel (8) intersecting with said first channel (6), the holder (1) further comprises a plunger (13) to be inserted in the second channel (8), said plunger (13) having a third channel (14) the cross section of which at least partly overlaps with the cross section of the first channel (6) when the plunger (13) is inserted into the body (2) so as to enable the stem (41) of the cutting tool (40) to extend into the third channel (14) when the stem (41) is inserted in the first channel (6), and that the holder (1) further comprises a mechanism (26) for locking the stem (41) against movement relative to the body (2) by means of the plunger.
2. A holder (1) according to clause 1, **characterized in that** that the plunger (13) comprises said locking mechanism (26).
3. A holder (1) according to clause 1 or 2, **characterized in that** that said locking mechanism (26) comprises a membrane (20) delimiting a pressure chamber (22).
4. A holder (1) according to clause 2 and 3, **characterized in that** that the membrane (20) forms a part of the third channel (14) and is configured to act directly on the stem (41).
5. A holder (1) according to clause 3 or 4, **characterized in that** said mechanism (26) for locking the stem (41) against movement relative to the body (2) includes means (27,28) for pressurizing the pressure chamber (22) so as to press the membrane (20) against the stem (41).
6. A holder (1) according to claim 2 and 5, **characterized in that** said mechanism (26) comprises a hydraulic oil pipe (25) which connects the pressure chamber (22) with an outwardly facing end wall (16a) of the plunger (13), at which said means (27,28) for pressurizing the pressure chamber (22)
7. A holder (1) according to any one of clauses 3-6, **characterized in that** the membrane (20) is cylindrical.
8. A holder (1) according to any preceding clauses, **characterized in that** said first channel (6) extend along a first length axis (7) and said second channel (8) extend along a second length axis (9) and that said first and second axes (7,9) are essentially perpendicular to each other.
9. A holder (1) according to any preceding clauses, **characterized in that** said third channel (14) extend through said plunger (13) so as to enable the stem (41) of the cutting tool (40) to extend through said third channel (14) when the stem (41) is inserted in the first channel (6).
10. A holder (1) according to any of the preceding clauses, **characterized in that** said holder further comprises a mechanism (29) for movement of the plunger along a length axis of said second channel so as to position the stem (41) in a lateral position relatively to the body.
11. A holder (1) according to any of the preceding clauses, **characterized in that** the holder comprises means (38) for angular and/or axial positioning of the cutting tool (40) relative to the body (2).
12. A holder (1) according to clause 11 , **characterized in that** the positioning means comprises an indentation (38) provided at an opening (18) of the first channel (6), which indentation is arranged to receive a notch (44) provided on said stem (41) of the cutting tool (40), thereby enabling axial and angular positioning of the cutting tool (40).
13. Cutting tool (40) for use in a holder (1), which cutting tool (40) includes a stem (41), **characterized in that** the cutting tool (40) comprises means (44) for angular and/or axial positioning of the cutting tool (40) relative to a body (2) of the holder (1).
14. Cutting tool (40) according to clause 13, **characterized in that** said positioning means (44) comprises a notch (44) provided on a stem (41) of the cutting tool (40), thereby enabling axial and angular positioning of the cutting tool in the holder.
15. Cutting tool (40) according to clause 14, **characterized in that** said stem (41) of said cutting tool (40) includes a cooling liquid flow entrance (45) in a lower region of the stem (41), a cooling liquid feeding conduit (47) extending from said liquid flow entrance (45) to a head (42) located on the top of said stem (41), and a cooling liquid ejector outlet nozzle (48) connected to said cooling liquid feeding conduit (47) at said head (42).
16. Cutting tool (40) according to clause 15, **characterized in that** said cooling liquid ejector outlet nozzle (48) has a smaller cross sectional area than said cooling liquid feeding conduit (47).
17. Cutting tool (40) according to clause 16, **characterized in that** the cooling liquid ejector outlet nozzle (48) has a length between 1 mm and 3 mm.
18. Cutting tool (40) according to any one of clauses 15-17, **characterized in that** said cooling liquid feeding conduit (47) is eccentric in relation to a centre axis (49) of said stem (41).
19. Cutting tool (40) according to any one of clauses 15 - 18, **characterized in that** said head includes a first surface (50), which extends in a plane in parallel with a longitudinal axis (47) of the cutting tool, wherein a cutting insert (43) is located on the first surface, and a second surface (51) which extends in a plane (P) which is inclined with regard to a plane at right angles to the longitudinal axis (47) and which intersects with a length axis (56) of the cooling liquid ejector outlet nozzle (48).
20. Cutting tool according to any of clauses 15 - 19, **characterized in that** said stem (41) includes or consist of cemented carbide and said head (42) is made of tool steel.
21. Cutting insert (43) characterized In that it before use has a polygonal cross sectional shape, that sides (52) of the polygon meet at rounded corners (53) and that a straight portion (54) is present in the rounded area.
22. Cutting insert (43) according to clause 21, **characterized in that** it has the shape of an equilateral triangle or a square.
23. Cutting insert (43) according to clause 21 or 22, **characterized in that** said cutting insert (53) is secured to said head such that said straight portion (54) is coaxial with a centre axis (49) of said stem (41).
24. Cutting insert according to any one of clauses 21-23, **characterized in that** the rounded corners (53) has a curvature radius between 0,6 and 1 ,2 mm and that the straight portion has a length between 0,07 and 0,15 mm.

## Claims

1. A cutting tool (40) for use in a holder (1), which cutting tool (40) includes a stem (41), wherein the cutting tool (40) comprises positioning means (44) for angular and/or axial positioning of the cutting tool (40) relative to a body (2) of the holder (1); wherein the positioning means (44) comprises a notch (44) provided on a stem (41) of the cutting tool (40), the notch being adapted to be inserted in an indentation of the holder to thereby enable axial and angular positioning of the cutting tool in the holder, wherein the stem (41) of the cutting tool (40) includes a cooling liquid flow entrance (45) in a lower region of the stem (41), a cooling liquid feeding conduit (47) extending from the liquid flow entrance (45) to a head (42) located on the top of the stem (41), and a cooling liquid ejector outlet nozzle (48) connected to the cooling liquid feeding conduit (47) at the head (42), wherein the cooling liquid ejector outlet nozzle (48) has a smaller cross sectional area than the cooling liquid feeding conduit (47) and wherein the cooling liquid ejector outlet nozzle (48) has a length between 1 mm and 3 mm.

2. A cutting tool (40) according to claim 1, wherein the cooling liquid feeding conduit (47) is eccentric in relation to a centre axis (49) of the stem (41).

3. A cutting tool (40) according to any one of claims 1 or 2, wherein the head includes a first surface (50), which extends in a plane in parallel with a longitudinal axis (47) of the cutting tool, wherein a cutting insert (43) is located on the first surface, and a second surface (51) which extends in a plane (P) which is inclined with regard to a plane at right angles to the longitudinal axis (47) and which intersects with a length axis (56) of the cooling liquid ejector outlet nozzle (48).

4. A cutting tool according to any of claims 1-3, wherein the stem (41) includes or consists of cemented carbide and the head (42) is made of tool steel.

5. A cutting insert (43) that before use has a polygonal cross sectional shape, wherein the sides (52) of the polygon meet at rounded corners (53), wherein a straight portion (54) is present in the rounded area and wherein the rounded corners (53) have a curvature radius between 0.6 and 1.2 mm and the straight portion has a length between 0.07 and 0.15 mm.

6. A cutting insert (43) according to claim 5, wherein the cutting insert has the shape of an equilateral triangle or a square.

7. A cutting insert (43) according to claim 5 or 6, wherein the cutting insert (53) is secured to a head of a stem of a cutting tool such that the straight portion (54) is coaxial with a centre axis (49) of the stem (41).
